# EUROPÄISCHE PATENTANMELDUNG

(11) **EP 4 046 794 A1**
(43) Veröffentlichungstag der Anmeldung: **24.08.2022**
(21) Anmeldenummer: 21158330.7
(22) Anmeldetag: 22.02.2021
(51) Int. Cl.: B32B 7/12, B32B 15/09, B32B 15/20, B32B 27/08, B32B 27/36, B65D 65/40, B65D 81/34

(54) **MEHRSCHICHTVERBUNDE AUS BEDRUCKTEN FOLIEN**

(71) Anmelder: Covestro Deutschland AG, 51373 Leverkusen (DE)
(72) Erfinder: Buechner, Joerg, 51467 Bergisch Gladbach (DE); Kraus, Harald, 51371 Leverkusen (DE); Fait, Thomas, 53844 Troisdorf (DE); Thiebes, Christoph, 51061 Köln (DE)
(74) Vertreter: Levpat

(57) **Zusammenfassung**

Die Erfindung betrifft einen Mehrschichtverbund, mindestens enthaltend eine erste polymere Schicht, die auf mindestens einer Seite mit mindestens einer Druckfarbe enthaltend mindestens ein Polyurethan als Bindemittel beschichtet ist, und eine zweite Schicht, die mit einer Polyurethan-Dispersion als Haftmittel zumindest teilweise mit der Seite der ersten polymeren Schicht, die mit mindestens einer Druckfarbe enthaltend mindestens ein Polyurethan als Bindemittel beschichtet ist, verbunden ist, ein Verfahren zur Herstellung des Mehrschichtverbundes, mindestens umfassend die Schritte (A) Bereitstellen mindestens einer ersten, polymeren Schicht, die auf mindestens einer Seite mit mindestens einer Druckfarbe enthaltend mindestens ein Polyurethan als Bindemittel beschichtet ist, (B) Auftragen einer Polyurethan-Dispersion als Haftmittel auf die erste, polymere Schicht, und (C) Inkontaktbringen der ersten, polymeren Schicht aus Schritt (B) mit mindestens einer zweiten Schicht, um den Mehrschichtverbund zu erhalten, die Verwendung des Mehrschichtverbundes zur Verpackung von Lebensmitteln oder Tierfutter, sowie eine Verpackung enthaltend einen entsprechenden Mehrschichtverbund.

## Beschreibung

Die Erfindung betrifft einen Mehrschichtverbund, mindestens enthaltend eine erste polymere Schicht, die auf mindestens einer Seite mit mindestens einer Druckfarbe enthaltend mindestens ein Polyurethan als Bindemittel beschichtet ist, und eine zweite Schicht, die mit einer Polyurethan-Dispersion als Haftmittel zumindest teilweise mit der Seite der ersten polymeren Schicht, die mit mindestens einer Druckfarbe enthaltend mindestens ein Polyurethan als Bindemittel beschichtet ist, verbunden ist, ein Verfahren zur Herstellung des Mehrschichtverbundes, mindestens umfassend die Schritte (A) Bereitstellen mindestens einer ersten, polymeren Schicht, die auf mindestens einer Seite mit mindestens einer Druckfarbe enthaltend mindestens ein Polyurethan als Bindemittel beschichtet ist, (B) Auftragen einer Polyurethan-Dispersion als Haftmittel auf die erste, polymere Schicht, und (C) Inkontaktbringen der ersten, polymeren Schicht aus Schritt (B) mit mindestens einer zweiten Schicht, um den Mehrschichtverbund zu erhalten, die Verwendung des Mehrschichtverbundes zur Verpackung von Lebensmitteln oder Tierfutter, sowie eine Verpackung enthaltend einen entsprechenden Mehrschichtverbund.

Mehrschichtverbunde für das Verpacken von Lebensmitteln sind an sich bekannt, siehe beispielsweise "Polyurethanes: Coatings, Adhesives and Sealants", Meier-Westhues, ISBN 9783866307827, Seiten 325 bis 331. Verpackungen aus Mehrschichtverbunde besitzen an ihrer Außenseite, d.h. an der für den Betrachter sichtbaren Seite der Verpackung, häufig eine transparente Folie, die auf der Innenseite bedruckt ist. Man spricht hier auch von einem Konterdruck oder Innenlagendruck. Die Druckfarbe wird auf die Innenlage appliziert, um den Druck vor mechanischer Beschädigung zu schützen. Außerdem erscheint der Druck auf der Innenseite beispielsweise einer Polyesterfolie brillanter, was die Verpackung bzw. das verpackte Lebensmittel hochwertiger erscheinen lässt.

Neben dem Aspekt der positiven Produktdarstellung ist der Innenlagendruck auch notwendig, um Informationen über das verpackte Lebensmittel, zu den Inhaltsstoffen, zu den Nährwertdaten oder auch zur Haltbarkeit des verpackten Lebensmittels für den Handel und den Verbraucher sichtbar zu machen. Das Bedrucken der Folie kann mit dem Flexodruck- oder dem Tiefdruck-Verfahren erfolgen. Typische Folien bestehen hierfür beispielsweise aus Polyester, Polypropylen oder Polyamid.

Druckfarben für Mehrschichtverbunde sind in der Regel lösemittelhaltig. Sie enthalten neben beispielsweise ca. 70 Gew.-% Lösemittel, beispielsweise ca. 10 Gew.-% mindestens eines Pigments und beispielsweise ca. 15 Gew.-% mindestens eines filmbildenden Bindemittels. Weitere Bestandteile sind Hilfsstoffe und Additive, beispielsweise Benetzungshilfsmittel, Entlüfter etc., um die Druckfarbe an den Druckprozess und an das zu bedruckende Substrat anzupassen. Typische Bindemittel für lösemittelbasierte Druckfarben sind beispielsweise Nitrocellulose, Polyvinylchlorid, Polyvinylbutyral und Polyurethan. Auch Mischungen von Bindemitteln sind möglich. Druckfarben auf Basis von Polyurethan können ggf. auch unter Mitverwendung von Vernetzerisocyanaten verarbeitet werden.

Wird ein Mehrschichtverbund für das Verpacken von Lebensmitteln verwendet, die während oder nach dem Abpacken hohen Temperatur ausgesetzt sind oder diese aufweisen, so muss auch die verwendete Druckfarbe bei diesen hohen Prozesstemperaturen stabil sein, d.h. die Druckfarbe darf sich bei hohen Temperaturen weder zersetzen oder farblich ändern. Beispiele für Behandlungen unter hoher Temperatur sind beispielsweise das Erwärmen oder Garen des Lebensmittels in der Verpackung, das so genannte Boil-in-Bag, das heiße Abfüllen des Lebensmittels, das so genannte Hot-filling, oder eine Dampfsterilisation des Lebensmittels oder Tierfutters nach dem Abfüllen in den Mehrschichtverbund, das so genannte Retort-Verfahren.

Neben den drucktechnischen Aspekten und der thermischen Stabilität der in Druckfarben eingesetzten Bindemittel besteht im Markt der grundsätzliche Wunsch, nur halogenfreie Druckfarben, Klebstoffe, Beschichtungen und Folien für das Verpacken von Lebensmittel zu verwenden. Aus diesem Grund wurden in den letzten Jahren Druckfarben entwickelt, die das Bindemittel Polyurethan enthalten. Diese Druckfarben werden heute bevorzugt für Mehrschichtverbunde, die einer hohen Temperatur ausgesetzt sind, eingesetzt.

Des Weiteren werden Polyurethan-Dispersionen als Haftmittel bei der Herstellung von Mehrschichtverbunden, dem so genannten Kaschieren, eingesetzt. Diese Polyurethan-Dispersionen sind dem Fachmann an sich bekannt.

EP 2 788 447 B1 beschreibt die Verwendung von wässrigen Polyurethan-Dispersionen zur Verbundfolienkaschierung, wobei das Polyurethan zu mindestens 10 Gew.-% aus mindestens einem amorphen Polyesterpolyol aufgebaut ist, und die Polyurethan-Dispersion mindestens einen externen Vernetzer enthält. Bei diesem externen Vernetzer handelt es sich um ein Polyisocyanat mit mindestens zwei Isocyanatgruppen. Das Polyurethan in der wässrigen Dispersion ist vorzugsweise mit Ammoniak neutralisiert. Das Folienmaterial zur Herstellung der Mehrschichtverbunde ist ausgewählt aus der Gruppe bestehend aus Aluminiumfolie, bedruckte Polyesterfolie, unbedruckte Polyesterfolie, bedruckte Polyamidfolie, unbedruckte Polyamidfolie, Polypropylenfolie, Polyethylenfolie und Kombinationen daraus. Die offenbarten Verbundfolien sind auch geeignet für hoch belastbare Verbundfolien, die insbesondere für Retort-Anwendungen, insbesondere Dampfsterilisation oder Pasteurisierung, und für Hot-filling-Anwendungen eingesetzt werden. Das genannte Dokument macht jedoch keine Angaben zu den in der Druckfarbe eingesetzten Bindemitteln. Ein Nachteil des gemäß diesem Dokument eingesetzten Klebstoffes ist die 2K- (2-komponentige) Verarbeitung. Das Polyisocyanat muss unmittelbar vor der Verarbeitung der Polyurethan-Dispersion zugegeben werden. Auf diese Weise können die Arbeitsschritte "Klebstoffherstellung" und "Verarbeitung" zeitlich nicht getrennt werden.

In dem Dokument US 6,235,384 B1 wird ein Laminat offenbart" umfassend zwei flexible Folien, die mit einem härtbaren Klebstoff verbunden sind. Der Klebstoff entsteht durch Mischen von zwei Komponenten unmittelbar vor der Verwendung, wobei eine Komponente mindestens ein Polyurethan mit mindestens einer Carbonsäure- oder Sulfonsäuregruppe ist. Die Carbonsäure- oder Sulfonsäuregruppen sind mit Ammoniak neutralisiert. Die zweite Komponente ist ein Vernetzungsmittel für das Polyurethanpolymer. Es enthält eine Vielzahl von Carbodiimid-, Aziridin- oder Epoxygruppen. Die genannten Laminate können auch in Hot-fill- oder Boil-in-Bag-Verfahren Verwendung finden. Das genannte Dokument nimmt keinen Bezug auf bedruckte Folien. Ein Nachteil dieses Verfahrens ist ebenfalls die Erfordernis der 2-komponentigen Verarbeitung.

Die Entkopplung der Zugabe eines Vernetzers zu der Polyurethan-Dispersion von dem Kaschierprozess, d.h. das Vermeiden einer 2-komponentigen Vorgehensweise, ist wirtschaftlich sinnvoll, weil damit, beispielsweise bei einer Unterbrechung des Kaschierprozesses, der Klebstoff der Klebstoffvorlage der Kaschieranlagen wieder entnommen und zu einem späteren Zeitpunkt wiederverwendet werden kann. Bei der 2-komponentigen Verarbeitung gemäß dem Stand der Technik können bei industriellen Fertigungsprozessen auf schnelllaufenden Kaschieranlagen bis zu 20 Gew.-% Klebstoff als Abfall anfallen. Dieser Abfall ist wirtschaftlich und ökologisch problematisch.

Aufgabe der vorliegenden Erfindung ist somit die Bereitstellung von Mehrschichtverbunden, insbesondere für das Verpacken von Lebensmitteln, wobei die Mehrschichtverbunde mit Polyurethan basierten Druckfarben bedruckt und insbesondere für die Verpackung von Lebensmittel oder Tierfuttermitteln, insbesondere in Boil-in-Bag-, Hot-filling- und Retort-Anwendungen geeignet sein sollen. Des Weiteren sollen die Klebstoffe, die für die Folienkaschierung verwendet werden, halogenfrei sein und 1K (1-komponentig) verarbeitbar sein.

Diese Aufgaben werden erfindungsgemäß gelöst durch einen Mehrschichtverbund, mindestens enthaltend eine erste, polymere Schicht, die auf mindestens einer Seite mit mindestens einer Druckfarbe enthaltend mindestens ein Polyurethan als Bindemittel beschichtet ist, und eine zweite Schicht, die mit einer Polyurethan-Dispersion als Haftmittel zumindest teilweise mit der Seite der ersten polymeren Schicht, die mit mindestens einer Druckfarbe enthaltend mindestens ein Polyurethan als Bindemittel beschichtet ist, verbunden ist.

Der erfindungsgemäße Mehrschichtverbund umfasst mindestens eine erste polymere Schicht, die auf mindestens einer Seite mit mindestens einer Druckfarbe enthaltend mindestens ein Polyurethan als Bindemittel beschichtet ist.

Erfindungsgemäß kann der Mehrschichtverbund neben dieser ersten, polymeren Schicht weitere Schichten enthalten, die mindestens teilweise, bevorzugt aber vollflächig, mit der ersten, polymeren Schicht bzw. mit weiteren vorhandenen Schichten verbunden sind. Erfindungsgemäß bevorzugt weist der Mehrschichtverbund neben der ersten, polymeren Schicht 1 bis 6 weitere Schichten auf.

Die erste, polymere Schicht kann im Allgemeinen jedes dem Fachmann als geeignet erscheinende Material enthalten, bevorzugt daraus bestehen. Bevorzugt ist in dem erfindungsgemäßen Mehrschichtverbund das Material der mindestens einen ersten, polymeren Schicht ausgewählt ist aus Polyethylen (PE), Polypropylen (PP), Polyamid (PA), Polyestern, Polyacetat, Zellophan, Polylactid (PLA) und Mischungen davon. Erfindungsgemäß besonders bevorzugt besteht die erste, polymere Schicht aus Polyethylenterephthalat, Polypropylen oder Polyamid, weiter bevorzugt ist die erste, polymere Schicht eine Polyethylenterephthalat-, Polypropylen- oder Polyamidfolie.

Wird erfindungsgemäß als erste, polymere Schicht eine Polyethylen- oder Polypropylenfolie eingesetzt, so enthält diese im Allgemeinen ein Gleitmittel, beispielsweise Ölsäureamid und/oder E-rucasäureamid. Dieses hat den Vorteil, dass ein Abreißen oder Dehnen der Folie bei hohen Bandgeschwindigkeiten während der Kaschierprozesses oder bei der Weiterverarbeitung zur Verpackung vermieden werden kann.

Die erfindungsgemäße vorliegende erste, polymere Schicht weist im Allgemeinen eine Dicke von 5 bis 200 µm, bevorzugt 12 bis 60 µm, auf.

Die ggf. weiteren vorliegenden Schichten können ebenfalls polymere Materialien enthalten bzw. aus diesen bestehen. Geeignete polymere Materialien sind für die ggf. vorliegenden weiteren Schichten ausgewählt aus polymeren Materialien, insbesondere Folien, ausgewählt aus Polyethylen (PE), insbesondere LDPE, LLDPE, HDPE, Polypropylen (PP), insbesondere als ungereckte Folie (cPP), einseitig gereckte Folie (oPP) oder beidseitig gereckte Folie (BOPP), aus Polyamid (PA), Polyestern, insbesondere Polyethylenterephthalat (PET), Polyacetat, Zellophan, Polylactid (PLA) und Mischungen davon. Erfindungsgemäß besonders bevorzugt bestehen die ggf. vorliegenden weiteren Schichten aus Polyethylenterephthalat, Polypropylen oder Polyamid, weiter bevorzugt sind die ggf. vorliegenden weiteren Schichten Polyethylenterephthalat-, Polypropylen- oder Polyamidfolien. Die ggf. vorliegenden weiteren Schichten können ggf. mit einem Gleitmittel, wie oben ausgeführt, ausgestattet sein. Die ggf. weiteren vorliegenden Schichten können auch aus weiteren nicht polymeren Materialien gebildet sein, beispielsweise Metalle, insbesondere Aluminium, oder Papier oder Kombinationen davon.

Die erfindungsgemäß ggf. vorliegenden weiteren Schichten weisen, sofern sie aus polymerem Material bestehen bzw. ein solches enthalten, im Allgemeinen eine Dicke von 5 bis 200 µm, bevorzugt 12 bis 60 µm, auf. Die erfindungsgemäß ggf. vorliegenden weiteren Schichten weisen, sofern sie aus einem Metall, insbesondere Aluminium, bestehen bzw. ein solches enthalten, im Allgemeinen eine Dicke von 5 bis 100 µm, bevorzugt 9 bis 15 µm. Eine ggf. vorliegende Schicht aus Papier weist im Allgemeinen eine Dicke von 5 bis 200 µm, bevorzugt zwischen 10 bis 50 µm, auf.

Die Abmessungen der ersten, polymeren Schicht und/oder der ggf. vorliegenden weiteren Schichten sind erfindungsgemäß nicht beschränkt, sondern richten sich nach der Verwendung des erfindungsgemäßem Mehrschichtverbundes, beispielsweise als Verpackung von Lebensmittel oder Tierfutter. Die vorliegende Erfindung betrifft den erfindungsgemäßen Mehrschichtverbund sowohl als Rollenware, beispielsweise bevor Lebensmittel oder Tierfutter mit dem erfindungsgemäßen Mehrschichtverbund verpackt werden, insbesondere als Rollenware mit dem Fachmann bekannten Abmessungen, als auch als die eigentliche Verpackung von Lebensmitteln oder Tierfutter, ebenfalls in dem Fachmann bekannten Abmessungen.

Die ggf. vorliegenden weiteren Schichten können durchsichtig oder undurchsichtig, d.h. beispielsweise mit bekannten Farbstoffen eingefärbt, sein. Des Weiteren können die ggf. vorliegenden weiteren Schichten bedruckt oder unbedruckt sein.

Die erste, polymere Schicht ist erfindungsgemäß auf mindestens einer Seite mit mindestens einer Druckfarbe enthaltend mindestens ein Polyurethan als Bindemittel beschichtet.

Im Rahmen der vorliegenden Erfindung ist die erste, polymere Schicht auf mindestens einer Seite, möglicherweise auch auf beiden Seiten mit mindestens einer Druckfarbe enthaltend mindestens ein Polyurethan als Bindemittel bevorzugt bedruckt. Dieser Druck kann erfindungsgemäß die bedruckte Seite der ersten, polymeren Schicht vollflächig oder teilweise, bevorzugt teilweise, bedecken.

Druckfarben enthaltend mindestens ein Polyurethan als Bindemittel sind dem Fachmann an sich bekannt und beispielsweise beschrieben in DE 60301623 T2, DE 60302141 T2 oder DE 60100208 T2.

Als Bindemittel geeignete Polyurethane sind insbesondere erhältlich durch Umsetzen eines Überschusses eines oder mehrerer aliphatischer Diisocyanate mit einer Gruppe von gegenüber Isocyanat reaktiven Komponenten, die aus einem oder mehreren Polyetherpolyolen besteht, die jeweils ein durchschnittliches Molekulargewicht im Bereich von nicht mehr als 2000 g/mol aufweisen, und mindestens einem Diamin besteht, um ein Prepolymer zu erhalten, und einer Mischung von Isophorondiamin und einem zweiten Diamin ausgewählt aus der Gruppe, die aus Ethylendiamin, 1,2-Diaminocyclohexan und 2,2,4- oder 2,4,4-Trimethyldiaminohexan (TMDA) besteht, im Überschuss bezüglich der freien NO-Gruppen des Prepolymers.

Beispiele für aliphatische Diisocyanat sind geradkettige aliphatische, verzweigtkettige aliphatische oder cycloaliphatische Diisocyanate. Vorzugsweise umfasst das Diisocyanat 1 bis 10 Kohlen-stoffatome. Beispiele für bevorzugte Diisocyanate sind 1,4-Diisocyanatobutan, 1,6-Diisocyanatohexan, 1,5-Di-isocyanato-2,2-dimethylpentan, 4-Trimethyl-1,6-diisocyanatohexan, 1,10-Disocyanatodecan, 1,3- und 1,4-Dii-socyanatocyclohexan, 1-Isocyanato-5-isocyanatomethyl-3,3,5-trimethylcyclohexan (Isophorondiisocyanat (IPDI)), 2,3-, 2,4- und 2,6-Diisocyanato-1-methylcyclohexan, 4,4'- und 2,4'-Disocyanatodicyclohexylmethan, 1-Iso-cyanato-3-(4)-isocyanatomethyl-1-methylcyclohexan, 4,4'- und 2,4'-Diisocyanatodiphenylmethan und Gemische hiervon, oder 2,2,4- oder 2,4,4-Trimethyldiisocyanatohexan (TMDI).

Bevorzugt verwendbare Polyetherpolyolkomponenten des Polyurethans entsprechen beispielsweise der folgenden Formel

HO-[-RO-]ₙ-H,

wobei R eine geradkettige oder verzweigtkettige C₂ bis C₁₀ Kohlenwasserstoffgruppe ist. Vorzugsweise ist R eine Alkylengruppe, die 2 bis 4 Kohlenstoffatome umfasst.

Beispiele für bevorzugte Polyetherpolyole schließen Polyethylenetherglycole (PEG), Polypropylenetherglycole (PPG) und Polytetramethylenetherglycole (Poly-THF) oder ein Gemisch hiervon ein. Die Verwendung von Poly-THF ist besonders bevorzugt. In der obigen Formel ist n derart ausgewählt, dass das durchschnittliche Molekulargewicht der Polyetherpolyole nicht mehr als 2000 g/mol beträgt, vorzugsweise weniger als 1500 g/mol und besonders bevorzugt 1000 g/mol oder weniger. Ein besonders bevorzugtes Polyetherpolyol der vorliegenden Erfindung ist Poly-THF 1000.

Als weitere Isocyanat-reaktive Komponente wird zumindest ein Diamin zugesetzt. Das Diamin kann irgendein aliphatisches, cycloaliphatisches, aromatisches oder heterocyclisches Diamin sein, das primäre oder sekundäre Aminogruppen aufweist. Beispiele sind Ethylendiamin, 1,2-Diaminopropan, 1,3-Diaminopropan, Diaminobutan, Hexamethylendiamin, 1,4-Diaminocyclohexan, 3-Aminomethyl-3,5,5-trimethylcyclohexylamin (Isophorondiamin), m-Xyloldiamin oder 1,3-bis (Aminomethyl)cyclohexan. Isophorondiamin ist besonders bevorzugt.

Als weiterer Isocyanat-reaktiver Bestandteil können ein oder mehrere Polyole, die ein durchschnittliches Molekulargewicht von gleich oder weniger 800 g/mol aufweisen, zugesetzt werden, beispielsweise 1,4-Butandiol, 1,6-Hexandiol, Neopentyldiol, Dihydroxypolyetherpolyole, Polyesterpolyole oder dergleichen.

Die ein oder mehreren Diisocyanate und die Isocyanat-reaktiven Komponenten werden miteinander umgesetzt, um ein erstes Isocyanat-terminiertes Prepolymer zu bilden. Das Verhältnis der Equivalentgewichte von Diisocyanatkomponenten zu Isocyanat-reaktiven Komponenten liegt bevorzugt bei 3,6:1 bis 1,1:1, vorzugsweise 2:1 bis 1,1:1.

Die Isocyanat-reaktiven Komponenten können parallel oder sequenziell dem(n) Isocyanat(en) zugesetzt werden. Im Falle eines sequenziellen Zusatzes der Isocyanat-reaktiven Bestandteile wird bevorzugt, zunächst die Polyetherpolyolbestandteile zuzusetzen gefolgt vom Zusatz des (der) Diamin-bestandteils(e) und wahlweise durch Zusatz des zumindest einen Polyols. Die Reaktion wird unter Bedingungen durchgeführt, die dem Fachmann wohl bekannt sind. Die Reaktion kann in Gegenwart eines Lösungsmittels unter Verwendung bekannter Katalysatoren durchgeführt werden.

Beispiele für geeignete Lösungsmittel sind Alkylacetate, wie beispielsweise Methylacetat, Ethylacetat, Propylacetat, Butylacetat und Pentylacetat. Die Gesamtmenge des Lösungsmittels liegt typischerweise bei 0 bis 90 Gew.-% des Reaktionsgemisches, vorzugsweise 25 bis 60 Gew.-% des Reaktionsgemisches.

Ein Katalysator kann verwendet werden, um die Reaktion des Diisocyanats mit dem Diol zu beschleunigen. Geeignete Katalysatoren sind Zinn-Derivate, wie beispielsweise Zinnoctylat, Zinnoxalat, Dibutylzinndilaurat, Zink-Derivate wie beispielsweise Zinkdiacetat, Zinkbisacetylacetonat oder Organoti-tan-Verbindungen wie beispielsweise Tetrabutyltitanat oder Gemische hiervon.

Weitere Additive bzw. Zusatzstoffe können vorliegen. Beispielsweise kann ein Antioxidans wie Irganox 1076 (Octadecyl-3,5-di-t-butyl-4-hydroxyhydrocinnamat) zugesetzt werden.

Die Bildung des Isocyanat-terminierten Prepolymers wird im Allgemeinen bei einer Temperatur von 0 bis 130 °C durchgeführt, vorzugsweise bei 50 bis 90 °C. Die Reaktionszeit beträgt beispielsweise 1 bis 12 Stunden, vorzugsweise 1 bis 4 Stunden.

Das so geformte Isocyanat-terminierte Prepolymer wird bevorzugt mit einem Gemisch aus Isophorondiamin (IPDA) und einem zweiten Diamin ausgewählt aus der Gruppe, die aus Ethylendiamin (EDA), 1,2-Diaminocyclo-hexan und 2,2,4- oder 2,4,4-Trimethyldiaminohexan (TMDA) besteht, kettenverlängert. Bevorzugt ist das Verhältnis des zweiten Diamins zu IPDA 10:1 bis 2:1, insbesondere 5:1 bis 3:1. Das Verhältnis der äquivalenten Gewichte des Isocyanat-terminierten Prepolymers zum Gemisch der Diaminkomponenten liegt beispielsweise bei 1:5 bis 1:1,1, vorzugsweise bei 1:4 bis 1:1,1.

Das Polyurethan kann in einem Lösungsmittel wie beispielsweise einem Alkohol, vorzugsweise Ethanol, oder einem Ester wie beispielsweise n-Propylacetat verdünnt werden, um eine klare Lösung zu erzielen.

Das Polyurethan weist bevorzugt ein durchschnittliches Molekulargewicht von 20000 bis 80000 g/mol, vorzugsweise 25000 bis 55000 g/mol, auf. Das Polyurethan weist einen Urethanisierungsgrad von beispielsweise 20 bis 30% auf.

Die eingesetzten Druckfarben sind an die Bedürfnisse unterschiedlicher Arten von Kunststoffsubstraten und/oder Aufbringungsverfahren anpassbar.

Neben dem mindestens einen Polyurethan umfasst die eingesetzte Druckfarbe Bestandteile, die üblicherweise für bestimmte Druckverfahren, insbesondere Gravurprintprozesse, das Flexodruck-Verfahren oder das Tiefdruck-Verfahren, verwendet werden. Die Hauptbestandteile abgesehen von dem mindestens einen Polyurethan sind mindestens ein Pigment und/oder mindestens ein Farbstoff, mindestens ein Lösungsmittel und gegebenenfalls zusätzliche Additive.

In der eingesetzten Druckfarbe kann ein Harz wie beispielsweise Nitrocellulose als Träger für den Farbstoff oder das Pigment verwendet werden. Als Lösungsmittel können üblicherweise verwendete Lösungsmittel wie beispielsweise Alkohole, insbesondere Ethanol oder iso-Propanol, verwendet werden.

Additive sind beispielsweise oberflächenaktive Stoffe bzw. Tenside, Weichmacher, Stabilisatoren oder Wachse.

Erfindungsgemäß kann eine oder mehrere verschiedene Druckfarbe(n) enthaltend mindestens ein Polyurethan als Bindemittel auf die erste, polymere Schicht aufgebracht sein. Weiterhin kann neben der mindestens einen Druckfarbe enthaltend mindestens ein Polyurethan als Bindemittel auch mindestens eine Druckfarbe enthaltend ein anderes Bindemittel als Polyurethan, vorhanden sein.

Verfahren zum Aufbringen der mindestens einen Druckfarbe auf die erste, polymere Schicht sind dem Fachmann an sich bekannt, beispielsweise Gravurprintprozesse, das Flexodruck-Verfahren oder das Tiefdruck-Verfahren.

Der erfindungsgemäße Mehrschichtverbund umfasst mindestens eine zweite Schicht, die mit einer Polyurethan-Dispersion als Haftmittel zumindest teilweise mit der Seite der ersten, polymeren Schicht, die mit mindestens einer Druckfarbe enthaltend mindestens ein Polyurethan als Bindemittel beschichtet ist, verbunden ist.

Die erfindungsgemäß vorliegende zweite Schichten kann ebenfalls polymere Materialien enthalten bzw. aus diesen bestehen. Geeignete polymere Materialien sind für die zweite Schicht ausgewählt aus polymeren Materialien, insbesondere Folien, ausgewählt aus Polyethylen (PE), insbesondere LDPE, LLDPE, HDPE, Polypropylen (PP), insbesondere als ungereckte Folie (cPP), einseitig gereckte Folie (oPP) oder beidseitig gereckte Folie (BOPP), aus Polyamid (PA), Polyestern, insbesondere Polyethylenterephthalat (PET), Polyacetat, Zellophan, Polylactid (PLA) und Mischungen davon. Erfindungsgemäß besonders bevorzugt besteht die zweite Schicht aus Polyethylenterephthalat, Polypropylen oder Polyamid, weiter bevorzugt ist die zweite Schicht eine Polyethylenterephthalat-, Polypropylen- oder Polyamidfolien. Die zweite Schicht kann ggf. mit einem Gleitmittel, wie oben ausgeführt, ausgestattet sein.

Bevorzugt kann die zweite Schicht aus nicht-polymeren Materialien gebildet sein, beispielsweise aus Metallen, insbesondere Aluminium, oder Papier oder Kombinationen davon. Bevorzugt betrifft die vorliegenden Erfindung den erfindungsgemäßen Mehrschichtverbund, wobei die mindestens eine weitere Schicht eine polymere Schicht oder eine Schicht aus mindestens einem Metall, bevorzugt Aluminium, ist.

Erfindungsgemäß besonders bevorzugt besteht die zweite Schicht des Mehrschichtverbundes aus einem Metall, insbesondere aus Aluminium.

Die zweite Schicht weist, sofern sie aus polymerem Material besteht bzw. ein solches enthält, im Allgemeinen eine Dicke von 5 bis 200 µm, bevorzugt 12 bis 60 µm, auf. Eine zweite Schicht aus Papier weist im Allgemeinen eine Dicke von 5 bis 200 µm, bevorzugt zwischen 10 bis 50 µm, auf.

Für den bevorzugten Fall, dass die erfindungsgemäße zweite Schicht aus einem Metall, insbesondere Aluminium, besteht bzw. ein solches enthält, weist sie im Allgemeinen eine Dicke von 5 bis 100 µm, bevorzugt 9 bis 15 µm, auf.

Die Abmessungen bezüglich Breite und Länge der zweiten Schicht sind erfindungsgemäß nicht beschränkt, richten sich aber bevorzugt nach den Abmessungen der ersten, polymeren Schicht und der ggf. vorliegenden weiteren Schichten. Bevorzugt weist die zweite Schicht daher die gleichen Abmessungen wir die erste, polymere Schicht und der gesamte erfindungsgemäße Mehrschichtverbund auf.

Die zweite Schicht kann durchsichtig oder undurchsichtig, d.h. beispielsweise mit bekannten Farbstoffen eingefärbt, sein. Des Weiteren kann die zweite Schicht bedruckt oder unbedruckt sein. Da die zweite Schicht bevorzugt aus einem Metall, weiter bevorzugt aus Aluminium, besteht, ist sie bevorzugt undurchsichtig.

Die vorliegende Erfindung betrifft bevorzugt den erfindungsgemäßen Mehrschichtverbund, wobei die erste, polymere Schicht aus einem Polyester besteht und die zweite Schicht aus Aluminium besteht.

Die in dem erfindungsgemäße Mehrschichtverbund vorliegenden Schichten, insbesondere die erste, polymere Schicht, die ggf. vorliegenden weiteren Schichten und die zweite Schicht, ggf. mit Druckfarbe enthaltend mindestens ein Polyurethan bedruckt oder bedampft mit Aluminium oder Siliziumdioxid, können erfindungsgemäß in jeder denkbaren Weise, insbesondere Reihenfolge, miteinander kombiniert werden. Der Aufbau des Mehrschichtverbundes richtet sich beispielsweise nach den Anforderungen hinsichtlich Barrierewirkung und Kosten.

Erfindungsgemäß bevorzugt umfasst der erfindungsgemäße Mehrschichtverbund eine erste polymere Schicht, die auf mindestens einer Seite mit mindestens einer Druckfarbe enthaltend mindestens ein Polyurethan als Bindemittel beschichtet ist, und eine zweite Schicht, die mit einer Polyurethan-Dispersion als Haftmittel zumindest teilweise mit der Seite der ersten polymeren Schicht, die mit mindestens einer Druckfarbe enthaltend mindestens ein Polyurethan als Bindemittel beschichtet ist, verbunden ist.

Erfindungsgemäß bevorzugt umfasst der erfindungsgemäße Mehrschichtverbund eine erste polymere Schicht, die auf mindestens einer Seite mit mindestens einer Druckfarbe enthaltend mindestens ein Polyurethan als Bindemittel beschichtet ist, und eine zweite Schicht, insbesondere aus einem Metall, bevorzugt aus Aluminium, die mit einer Polyurethan-Dispersion als Haftmittel zumindest teilweise mit der Seite der ersten polymeren Schicht, die mit mindestens einer Druckfarbe enthaltend mindestens ein Polyurethan als Bindemittel beschichtet ist, verbunden ist, und eine dritte, polymere Schicht, die mit der Seite der zweiten Schicht, die nicht mit der ersten, polymeren Schicht verbinden ist, bevorzugt mit einem Haftmittel, insbesondere einer Polyurethan-Dispersion, zumindest teilweise verbunden ist.

Liegen in dem erfindungsgemäßen Mehrschichtverbund Schichten mit niederenergetischen Oberflächen, d.h. Oberflächen mit einer Oberflächenenergie < 38mN/m, vor, so ist es erfindungsgemäß bevorzugt, dass diese einer Vorbehandlung mit Atmosphärendruckplasma (Corona) unterzogen werden. Beispielsweise kann eine solche Vorbehandlung bei der ersten, polymeren Schicht unmittelbar vor dem Auftrag der Polyurethan-Dispersion als Haftmittel oder bei der zweiten Schicht vor dem Einlaufen in das Kaschierwerk erfolgen.

Die mindestens zwei Schichten des erfindungsgemäßen Mehrschichtverbundes sind mit einer Polyurethan-Dispersion als Haftmittel verbunden. Erfindungsgemäß bevorzugt wird als Haftmittel mindestens eine 1K- (1-komponentige) Polyurethan-Dispersion eingesetzt wird. Diese bedeutet erfindungsgemäß, dass eine als Haftmittel Dispersion eingesetzt wird, die vor der Applikation auf die mindestens eine polymere Schicht nicht mit einer weiteren Komponente versetzt werden muss.

Bevorzugt wird erfindungsgemäß als Haftmittel mindestens eine Polyurethan-Dispersion eingesetzt, welche eine Mischung aus mindestens einer wässrigen Polyurethan-Dispersion (I) und mindestens einer wässrigen Dispersion mindestens eines hydrophilierten Polycarbodiimids (II) ist.

Wässrige Polyurethan-Dispersionen (I) im Sinne der vorliegenden Erfindung sind Dispersionen von Polyurethan-Polyharnstoff-Polymeren in Wasser. Im Rahmen der vorliegenden Erfindung betrifft der Begriff "Polyurethan" polymere Verbindungen, die Polyurethan- und/oder Polyharnstoff-Gruppen aufweisen.

Erfindungsgemäß bevorzugt eingesetzte Polyurethane enthalten als Aufbaukomponenten:
(A) mindestens ein amorphes Polyesterpolyol mit einem Molekulargewicht von mindestens 500 g/mol,
(B) mindestens eine Di- und/oder Polyisocyanatkomponente,
(C) mindestens eine Verbindung ausgewählt aus der Gruppe bestehend aus ein- bis drei-wertigen Alkoholen, welche zusätzlich mindestens eine ionische Gruppe oder mindestens eine in eine ionische Gruppe überführbare Gruppe enthalten,
(D) mindestens eine Verbindung ausgewählt aus der Gruppe bestehend aus Neutralisationsaminen und Ammoniak,
(E) mindestens ein Diamin als Kettenverlängerungsmittel, und
(F) gegebenenfalls sonstige isocyanatreaktive Verbindungen.

Amorph im Rahmen der vorliegenden Erfindung sind Feststoffe, deren Bausteine nicht in Kristallgittern angeordnet, d.h. nicht kristallin, sind. Amorphe Polyester sind erfindungsgemäß insbesondere solche Polyester, welche bei einer DSC-Messung nach DIN 65467 - 1999-03 bei einer Aufheizrate von 20 K/min im Temperaturbereich von -30 °C bis +100 °C keinen Schmelzpeak aufweisen.

Bevorzugt enthält das Polyurethanpolymer mindestens ein amorphes Polyesterpolyol, bevorzugt Polyesterdiol, in einer Menge von mindestens 20 Gew.-%, bevorzugt mindestens 40 Gew.-%, besonders bevorzugt mindestens 60 Gew.-%, jeweils bezogen auf das Polyurethanpolymer. Eine Obergrenze für die Menge an mindestens einem amorphen Polyesterpolyol in dem Polyurethanpolymer ist bevorzugt höchstens 90 Gew.-%, beispielsweise höchstens 88 Gew.-%, sie kann aber auch über 90 Gew.-% betragen.

Bevorzugt hat das mindestens eine amorphe Polyesterpolyol, bevorzugt Polyesterdiol, ein mittleres Molekulargewicht von mindestens 500 g/mol. Besonders bevorzugt liegt das mittlere Molekulargewicht bei 1000 bis 4000 g/mol, besonders bevorzugt 1700 bis 2500 g/mol, jeweils ermittelt durch Gelpermeationschromatographie (GPC) nach DIN 55672-1:2016-03 in Tetrahydrofuran bei 23 °C gegen einen Polystyrolstandard

Das erfindungsgemäß eingesetzte mindestens eine amorphe Poyesterpolyol ist bevorzugt mindestes ein amorphes Polyesterdiol. Vorzugsweise wird zur Herstellung des mindestens einen amorphen Polyesterdiols (A) mindestens eine aromatische Dicarbonsäure verwendet. Bevorzugt werden Isophtalsäure und Terephthalsäure. Besonders bevorzugt ist Isophthalsäure.

In einer bevorzugten Ausführungsform wird zur Herstellung des mindestens einen amorphen Polyesterdiols (A) ein Gemisch von Carbonsäuren verwendet bestehend aus mindestens einer aliphatischen Dicarbonsäure mit 3 bis 10, vorzugsweise 4 bis 8 C-Atomen, und mindestens einer aromatischen Dicarbonsäure verwendet. Das Mischungsverhältnis ist vorzugsweise 0,5:1 bis 2:1. Ein bevorzugtes Dicarbonsäuregemisch ist Adipinsäure/Isophthalsäure, insbesondere im Verhältnis von 0,5:1 bis 2:1.

Zur Herstellung des mindestens einen amorphen Polyesterdiols (A) können als mehrwertige Alkohole beispielsweise Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole eingesetzt werden. Bevorzugt sind Alkohole der allgemeinen Formel HO-(CH₂)ₓ-OH, wobei x eine ganze Zahl von 1 bis 20, bevorzugt eine gerade Zahl von 2 bis 20 ist. Bevorzugte Beispiele hierfür sind Ethylenglycol, Butan-1,4-diol, Hexan-1,6-diol, Octan-1,8-diol und Dodecan-1,12-diol. Weiterhin bevorzugt ist Neopentylglykol. Besonders bevorzugt sind Butan-1,4-diol, Hexan-1,6-diol und Neopentylglycol.

Als Diisocyanate (B) zu nennen sind insbesondere Diisocyanate der allgemeinen Formel X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen aliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-lsomere, sowie aus diesen Verbindungen bestehende Gemische. Derartige Diisocyanate sind im Handel erhältlich.

Erfindungsgemäß bevorzugt werden Hexamethylendiisocyanat, Tetramethylxylylendiisocyanat (TMXDI) und 1-Isocyanato-3,5,5-trimethyl-5-isocyanatomethylcyclohexan (IPDI), besonders bevorzugt ist 1-Isocyanato-3,5,5-trimethyl-5-isocyanatomethylcyclohexan (IPDI).

Es ist selbstverständlich auch möglich, die in der Polyurethanchemie an sich bekannten höherfunktionellen Polyisocyanate oder auch an sich bekannte modifizierte, beispielsweise Carbodiimid-, Allophanat-, Isocyanurat-, Urethan- und/oder Biuretgruppen aufweisende Polyisocyanate anteilig als Komponente (B) mitzuverwenden.

Bevorzugt sind dabei Isocyanurat- und/oder Biuretgruppen aufweisende Polyisocyanate, die in geringem Umfang mitverwendet werden. Handelsübliche Verbindungen sind beispielsweise das Isocyanurat oder das Biuret des Hexamethylendiisocyanats.

Geeignete Komponenten (C), welche zusätzlich mindestens eine ionische Gruppe oder mindestens eine in eine ionische Gruppe überführbare Gruppe enthalten, sind beispielsweise ein- bis drei-wertigen Alkohole, Monoamino- und/oder Diaminocarbonsäuren.

Die ein- bis dreiwertigen Alkohole (C) enthalten insbesondere anionische Gruppen wie die Sulfonat-, die Carboxylat- und die Phosphatgruppe.

Der Begriff ionische Gruppe soll auch solche Gruppen mit umfassen, die in ionische Gruppen überführt werden können. Entsprechend werden auch die durch Neutralisation in ionische Gruppen überführbaren Carbonsäure-, Sulfonsäure- oder Phosphorsäuregruppen als ionische Gruppen aufgefasst. Als Verbindung (C) bevorzugt sind Dihydroxycarbonsäuren und Diaminocarbonsäuren. Ganz besonders bevorzugt sind Dihydroxycarbonsäuren, insbesondere die Dimethylolpropionsäure (DMPS) und die Dimethylolbuttersäure (DMBS).

Als Komponente (D) eignen sich beispielsweise Ammoniak und tertiäre Amine. Besonders gut geeignete und bevorzugte tertiäre Amine sind Triethylamin, Dimethylcyclohexylamin und Ethyldiisopropylamin.

Es können auch andere Amine zur Salzbildung eingesetzt werden, beispielsweise Diethanolamin, Triethanolamin, Dimethylethanolamin, Methydiethanolamin, Aminomethylpropanol und auch Mischungen der genannten und auch anderer Amine.

Besonders bevorzugt als (D) sind Ammoniak und Triethylamin. Ganz besonders bevorzugt ist Ammoniak. Ein Teil des Ammoniaks reagiert dabei zunächst mit den im Prepolymer bestehend aus den Komponenten (A), (B) und (C) vorhandenen NCO-Gruppen unter Addition und Kettenabbruch, der Rest als Neutralisationsamin. Durch vorherige Umsetzung des Prepolymers mit einem Diamin als Kettenverlängerungsmittel (E) kann bei Verwendung von Ammoniak die Zahl der verbleibenden NCO-Gruppen und somit das Verhältnis zwischen Kettenverlängerung und Kettenabbruch variiert werden. Dies ermöglicht eine Einstellung des Molgewichts des Polymers. Sinnvollerweise wird bei Verwendung von Ammoniak das Prepolymer zunächst mit der Komponente (E) umgesetzt und erst anschließend Ammoniak als Komponente (D) zugegeben.

Geeignet Beispiele für Diamine (E) sind 1,2-Ethandiamin (Ethylendiamin), 1,6-Hexamethylendiamin, 1-Amino-3,3,5-trimethyl-5-amino-methyl-cyclohexan (Isophorondiamin), Piperazin, 1,4-Diaminocyclohexan und Bis-(4-amino-icyclohexyl)-methan. Weiterhin kommen Adipinsäuredihydrazid, Hydrazin bzw. Hydrazinhydrat in Frage. Selbstverständlich können auch Mischungen mehrerer der genannten, ggf. auch zusammen mit nicht genannten Verbindungen D), eingesetzt werden.

Bevorzugte Komponenten (E) sind Ethylendiamin und Isophorondiamin. Ganz besonders bevorzugt ist Ethylendiamin.

In einer ganz besonders bevorzugten Ausführungsform der vorliegenden Erfindung werden Ammoniak als Komponente (D) und Ethylendiamin als Komponente (E) verwendet.

Als sonstige isocyanatreaktive Verbindungen (F) kommen prinzipiell alle von (A) bis (E) verschiedene, gegenüber Isocyanat reaktive Verbindungen in Frage, beispielsweise Diole mit einem Molekulargewicht von 62 bis 499 g/mol, kristalline Polyesterdiole, weiter Polymerdiole wie Polyether, Lactone oder Polycarbonate, Monoole, Monoamine und Polyamine.

Zur Herstellung der erfindungsgemäß eigesetzten wässrigen Polyurethan-Dispersionen können sämtliche aus dem Stand der Technik bekannte Verfahren, beispielsweise Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie, Houben-Weyl, Erweiterungs- und Folgebände zur 4. Auflage, Band E20, H. Bartl und J. Falbe, Stuttgart, New York, Thieme 1987, Seiten 1671 bis 1682. Bevorzugt sind das Schmelz-Emulgier-, Prepolymer-Misch- und das Aceton-Verfahren. Besonders bevorzugt ist das Aceton-Verfahren. Die Anwendung und Durchführung des Aceton-Verfahrens ist Stand der Technik und dem Fachmann beispielsweise aus der EP 0 232 778 bekannt.

Die erfindungsgemäß eingesetzte Polyurethan-Dispersion hat beispielsweise einen Feststoffgehalt von 35 bis 48 Gew.-%, bevorzugt 38 bis 45 Gew.-%.

Die wässrige Dispersion eines hydrophilierten Polycarbodiimids (II) im Sinne der vorliegenden Erfindung ist ein Carbodiimidgruppen aufweisender Vernetzer, der in Wasser dispergiert, emulgiert, gelöst bzw. in Wasser dispergierbar, emulgierbar und/oder löslich ist.

Erfindungsgemäß bevorzugt sind Carbodiimidstrukturen enthaltende Vernetzer die durchschnittlich 3 bis 20, besonders bevorzugt 4 bis 8 Carbodiimidstruktureinheiten, je Molekül enthalten.

Solche Carbodiimidvernetzer können beispielsweise durch Carbodiimidisierung von Diisocyanaten wie beispielsweise Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methyl-cyclohexan, 4,4'-Diisocyanato-dicyclohexyl-methan, 4,4'-Diisocyanato-dicyclohexyl-propan-(2,2), 1,4-Di-iso-icyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat, ggf. unter Mitverwendung von monofunktionellen Isocyanaten wie beispielsweise Stearylisocyanat, Phenylisocyanat, Butylisocyanat, Hexylisocyanat oder/und höherfunktionellen Isocyanaten wie Trimeren, Uretdionen, Allophanaten, Biureten der beispielhaft genannten Diisocyanate und anschließender, gleichzeitiger oder auch vorhergehender Umsetzung mit hydrophilierenden Komponenten, beispielsweise mono- oder difunktionelle Polyethern auf Basis von auf Alkoholen oder Aminen gestartete Ethylenoxid-Polymeren oder Ethylenoxid/Propylenoxid-Copolymeren erhalten werden.

Bevorzugte Carbodiimide werden durch Carbodiimidisierung von 1-Isocyanato-3,3,5-trimethyl-5-isocyanatomethyl-cyclohexan und/oder 4,4'-Diisocyanato-dicyclohexyl-methan erhalten.

Der Einsatz von gemischten Carbodiimiden, welche beispielsweise Carbodiimide auf Basis unterschiedlicher Isocyanate enthalten, ist ebenfalls möglich.

Geeignete Carbodiimide sind beisipelsweise Carbodilite^{®} SV-02, Carbodilite^{®} V-02-L2, Carbodilite^{®} E-02, alle von Nisshinbo Industries, Tokio, Japan, und Desmodur^{®} XP 2802 von Covestro Deutschland AG. Bevorzugte Carbodiimide sind Carbodilite^{®} V-02-L2 und Desmodur XP^{®} 2802, besonders bevorzugt ist Desmodur XP^{®}.

Geeignete Carbodiimide sind ebenfalls wässrige Carbodiimiddispersionen bzw. Carbodiimidemulsionen bzw. Carbodiimidlösungen und/oder wasserdispergierbare Carbodiimide, enthaltend Umsetzungsprodukte von
a) mindestenes einem Carbodiimid, welches durchschnittlich 3 bis 20, vorzugsweise 4 bis 8 Carbodiimidstruktureinheiten auf Basis von difunktionellen Isocyanaten, insbesondere Desmodur^{®} W, Desmodur^{®} I, Desmodur^{®} H und/oder Desmodur^{®} T (alle Bayer MaterialScience, Deutschland) aufweist und
b) hydrophilen Komponenten wie beispielsweise mindestens einem hydroxyfunktionellen Polyether auf Basis von Ethylenoxid bzw. auf Basis von Ethylen- und Propylenoxid, wie beispielsweise Methoxypolyethylenglykole, Ethyoxypolyethylenglykole, Butoxypolyethylenglykole, jeweils mit Molekulargewichten von 350 bis 3000 g/Mol, wie Carbowax^{®} MPEG 750, MPEG 550, MPEG 350, jeweils von DOW Chemical Company, USA, Polyether LB 25 von Bayer MaterialScience, Deutschland und/oder entsprechende aminofunktionelle Polyether und/oder ionische hydrophilierend wirkende Substanzen wie Salze von Aminocarbonsäuren, Hydroxycarbonsäuren oder Aminosulphonsäuren, wie beispielsweise Dimethylolpropionsäure, Dimethylolbuttersäure, Hydroxypivalinsäure, Aminoethansulphonsäure,
c) ggf. sonstigen hydroxy- und/oder aminofunktionellen und/oder anderen isocyanatreaktive Verbindungen wie beispielsweise Monoalkoholen wie Butylglykol, Butyldiglykol, Ethoxydiglykol, Methoxypropanol, Methyoxyglykol, Methanol, Benzylakohol, Fettalkohole, 2-Etyhlhexanol, Stearylalkohol, Oleylalkohol, Ethanol, Butanol, Isopropanol, Hexanol, Cyclohexanol, Octanol, Pentanol und/oder Monoaminen, Oximen, Lactamen wie Diethylamin, Diisopropylamin, Triazol, Dimethyltriazol, Dimethylpyrazol, Morpholin, Butanonoxim, Caprolactam, tert.-butyl-Benzylamin und/oder Malonsäuredialkylester, Acetessigester, Cyclopenatanoncarboxyalkylester und/oder Diolen, Diaminen, Aminoakoholen, Triolen wie beispielsweise Trimethylolpropan, Glycerin, Neopentylglykol, Butandiol, Ethylenglykol, Cyclohexandiol, Cyclohexandimethanol, Propylenglykol, Diethylenglykol, Dipropylenglykol, Triethylenglykol, Tripropylenglykol, Ethanolamin, Diethanolamin, Isopropanolamin, Diisopropanolamin, Triethanolamin, Hydroxyethylethylendiamin, Ethylendiamin, Isophorondiamin, Hexamethylendiamin, Hydrazin.

Die Komponenten a), b) und c) können in beliebiger Reihenfolge, ggf. auch in Anwesenheit von Lösemitteln, zur Reaktion gebracht werden.

Carbodiimide ii) sind vorzugsweise Umsetzungsprodukte aus 50 bis 97 Gew.-% Komponente a), 3 bis 40 Gew.-% Komponente b) und 0 bis 25 Gew.-% Komponente c), wobei die Summe der Komponenten a), b) und c) jeweils 100 gew.-% ergibt.

Besonders bevorzugt sind die Carbodiimide Umsetzungsprodukte aus 60 bis 90 Gew.-% Komponente a), 5 bis 27 Gew.-% Komponente b) und 0,5 bis 15 Gew.-% Komponente c), wobei die Summe der Komponenten a), b) und c) jeweils 100 gew.-% ergibt.

Die Carbodiimide können nach bekannten Verfahren hergestellt werden. Als Katalysatoren geeignet sind beispielsweise heterocyclische, Phosphor enthaltende Verbindungen, Metallcarbonyle, Phospholine, Phospholene und Phospholidine sowie deren Oxide und Sulfide.

Bevorzugt wird zunächst ein Carbodiimid durch Erhitzen mindestens eines mindestens difunktionellen Isocyanates in Gegenwart eines geeigneten Katalysators, wie beispielsweise Phospholinoxid, auf 100 bis 250 °C solange unter Kohlendioxidabspaltung zur Reaktion gebracht, bis der gewünschte Umsetzungsgrad erreicht ist, und dieses Carbodiimid dann in einem weiteren Reaktionsschritt mit Komponente b) und ggf. gleichzeitig bzw. anschließend mit Komponente c) umgesetzt und ggf. anschließend dispergiert, emulgiert oder gelöst wird.

Die erfindungsgemäß eingesetzte wässrigen Dispersion des hydrophilierten Polycarbodiimids hat beispielsweise einen Feststoffgehalt von 37 bis 42 Gew.-%.

Die erfindungsgemäß als Haftmittel eingesetzte wässrige Polyurethan-Dispersion enthält bevorzugt 70 bis 99 Gew.-% der erfindungsgemäßen Polyurethandispersion (I) und 1 bis 30 Gew.-% der wässrige Dispersion des hydrophilierten Polycarbodiimids (II). Eine besonders bevorzugt als Haftmittel eingesetzte Polyurethandispersionen enthält 80 bis 97 Gew.-% der erfindungsgemäßen Polyurethan-dispersion (I) und 3 bis 20 Gew.-% der wässrigen Dispersion des hydrophilierten Polycarbodiimids (II). Eine ganz besonders bevorzugt als Haftmittel eingesetzte Polyurethan-Dispersion enthält 85 bis 92 Gew.-% der erfindungsgemäße Polyurethandispersion (I) und 8 bis 15 Gew.-% der wässrigen Dispersion des hydrophilierten Polycarbodiimids (II).

Die als Haftmittel eingesetzte wässrige Polyurethan-Dispersion kann durch einfaches Mischen der Komponenten (I) und (II) hergestellt werden. Bevorzugt wird die wässrige Polyurethandispersion (I) vorgelegt und die wässrige Dispersion des hydrophilierten Polycarbodiimids (II) unter Rühren zugegeben. Die Klebstoffdispersionen sind mindestens über mehrere Stunden lagerstabil und können somit 1-komponentig verarbeitet werden.

Die erfindungsgemäß als Haftmittel eingesetzte wässrige Polyharnstoff-Dispersion kann alleine oder mit in der Beschichtungs- und Klebstofftechnologie bekannten Bindemitteln, Hilfsstoffen und Zugschlagstoffen, insbesondere Emulgatoren und Lichtschutzmitteln wie UV-Absorbern und sterisch gehinderte Aminen (HALS), weiterhin Antioxidantien, Füllstoffen und Hilfsmitteln, beispielsweise Antiabsetzmitteln, Entschäumungs- und/oder Netzmitteln, Verlaufsmitteln, Reaktiv-Verdünnern, Weichmachern, Katalysatoren, Hilfslösemitteln und/oder Verdickern und Additiven, wie beispielsweise Pigmente, Farbstoffe oder Mattierungsmittel, eingesetzt werden. Auch Klebrigmacher, so genannte Tackifier, können zugegeben werden.

Die Additive können dem erfindungsgemäß eingesetzten Haftmittel unmittelbar vor der Verarbeitung zugegeben werden. Es ist aber auch möglich, zumindest einen Teil der Additive vor oder während der Dispergierung des Polyurethans zuzugeben.

Die Auswahl und die Dosierung dieser Stoffe, die den Einzelkomponenten und/oder der Gesamtmischung zugegeben werden können, sind dem Fachmann prinzipiell bekannt und können ohne ungebührlich hohen Aufwand auf den speziellen Anwendungsfall zugeschnitten durch einfache Vorversuche ermittelt werden.

Die vorliegende Erfindung betrifft des Weiteren auch ein Verfahren zur Herstellung des erfindungsgemäßen Mehrschichtverbundes, mindestens umfassend die Schritte:
(A) Bereitstellen mindestens einer ersten, polymeren Schicht, die auf mindestens einer Seite mit mindestens einer Druckfarbe enthaltend mindestens ein Polyurethan als Bindemittel beschichtet ist,
(B) Auftragen einer Polyurethan-Dispersion als Haftmittel auf die erste, polymere Schicht,
(C) Inkontaktbringen der ersten, polymeren Schicht aus Schritt (B) mit mindestens einer zweiten Schicht, um den erfindungsgemäßen Mehrschichtverbund zu erhalten.

Die einzelnen Schritte des erfindungsgemäßen Verfahrens werden im Folgenden detailliert beschrieben.

Insbesondere erfolgt die Herstellung des erfindungsgemäßen Mehrschichtverbundes im semi-kontinuierlichen Trockenkaschierverfahren.

Schritt (A) umfasst das Bereitstellen der mindestens einer ersten, polymeren Schicht, die auf mindestens einer Seite, zumindest teilweise oder vollständig, mit mindestens einer Druckfarbe enthaltend mindestens ein Polyurethan als Bindemittel beschichtet ist.

Erfindungsgemäß kann in Schritt (A) nur eine erste, polymere Schicht bereitgestellt werden. In Schritt (A) kann auch eine Kombination der ersten, polymeren Schicht und weiteren Schichten bereitgestellt werden.

Die erste, polymere Schicht ist auf mindestens einer Seite, zumindest teilweise oder vollständig, mit mindestens einer Druckfarbe enthaltend mindestens ein Polyurethan als Bindemittel beschichtet.

Verfahren zur Beschichtung mit einer entsprechenden Druckfarbe sind dem Fachmann an sich bekannt, beispielsweise Gravurprintprozesse, das Flexodruck-Verfahren oder das Tiefdruck-Verfahren. Die Beschichtung der ersten, polymeren Schicht kann dabei einfarbig, mehrfarbig, nur teilweise oder die Schicht vollständig bedeckend sein.

Das Bereitstellen in Schritt (A) des erfindungsgemäßen Verfahrens erfolgt beispielsweise, indem die erste, polymere Schicht von einer Abrollstation durch ein Auftragswerk geführt wird.

Schritt (B) des erfindungsgemäßen Verfahrens umfasst das Auftragen einer Polyurethan-Dispersion als Haftmittel auf die erste, polymere Schicht.

Im Allgemeinen kann Schritt (B) auf alle dem Fachmann bekannte Arten erfolgen, beispielsweise wird das Haftmittel in Schritt (B) mittels Gravur- oder Glattwalze auf die erste, polymere Schicht aufgetragen. Dabei kann die Walzenrotation in Laufrichtung der ersten, polymeren Schicht oder im Gegenlauf (reverse) erfolgen. Nach dem Walzenauftrag kann die Haftmittelschicht beispielsweise mit einer rotierenden Glättstange behandelt werden, was in der Regel zu einer glatteren Haftmittelschicht führt. Insbesondere bei teilweise transparenten Mehrschichtverbunden kann so die Optik der Haftmittelschicht verbessert werden.

Weitere geeignete Techniken zum Auftragen der Polyurethan-Dispersion in Schritt (B) sind Sprühauftrag, Auftrag mittels Luftbürste oder Vorhangbeschichtung.

In Schritt (B) wird die Auftragsmenge der Polyurethan-Dispersion so eingestellt, dass nach dem Trocknen, d.h. dem Abdampfen des Wassers, 0,1 bis 20 g/m², bevorzugt 0,5 bis 7g/m² Polyurethan-Polymer auf der ersten, polymeren Folie vorhanden sind.

Des Weiteren wird nach dem Auftrag der Polyurethan-Dispersion die beschichtete erste, polymere Schicht bevorzugt getrocknet, insbesondere durch einen Trockenkanal geführt. Im Trockenkanal wird die Polyurethan-Dispersionsschicht getrocknet und alle unter den Trocknungsbedingungen flüchtigen Bestandteile abgedampft. Die Temperatur im Trockenkanal liegt beispielsweise bei 50 bis 200 °C, bevorzugt 70 bis 90 °C.

Die Bahngeschwindigkeit in dem Trocknungsschritt hängt beispielsweise von dem Auftragsgewicht der Dispersion, dem Polymeranteil in der Dispersion, der Länge des Trockenkanals, der Temperatur im Trockenkanal, der Luftströmung im Trockenkanal, der Menge Zuluft in den Trockenkanal sowie der Luftfeuchtigkeit der Zuluft ab. Die Bahngeschwindigkeit ist für die Wirtschaftlichkeit des Prozesses entscheidend und liegt bevorzugt bei 100 bis 1000 m/min., bevorzugt 150 bis 300m/min.

Schritt (C) des erfindungsgemäßen Verfahrens umfasst das Inkontaktbringen der ersten, polymeren Schicht aus Schritt (B) mit mindestens einer zweiten Schicht, um den erfindungsgemäßen Mehrschichtverbund zu erhalten.

Schritt (C) des erfindungsgemäßen Verfahrens erfolgt bevorzugt, indem die erste, polymere Schicht mit dem getrockneten Polyurethan-Polymer aus Schritt (B) nach dem Auslaufen aus dem Trockenkanal in einem beheizbaren Kaschierwerk, bevorzugt besteht das Walzenpaar aus einer Stahlwalze und einer Gummiwalze, gegen die zweite Schicht kaschiert wird. Die zweite Schicht ist hierbei zulaufend.

Der Druck in Schritt (C), insbesondere zwischen den Walzen im Kaschierwerk, beträgt dabei bevorzugt 100 bis 3000 KN/m², bevorzugt 500 bis 2000 kN/m². Die Temperatur in Schritt (C), insbesondere der Stahlwalze im Kaschierwerk, liegt bei 20 bis 200 °C, bevorzugt 40 bis 90 °C.

Nach Schritt (C) wird der erhaltene erfindungsgemäße Mehrschichtverbund aufgewickelt und bis zur Weiterverarbeitung, d.h. bis zum Verpacken von Lebensmitteln oder Tierfutter gelagert.

Die vorliegende Erfindung betrifft des Weiteren die Verwendung des erfindungsgemäßen Mehrschichtverbundes zur Verpackung von Lebensmitteln oder Tierfutter, insbesondere für Behandlungen unter hoher Temperatur, beispielsweise 90 bis 140 °C, für beispielsweise bis zu 60 min. Beispiele dafür sind das Erwärmen oder Garen des Lebensmittels in der Verpackung, das so genannte Boil-in-Bag, das heiße Abfüllen des Lebensmittels, das so genannte Hot-filling, oder eine Dampfsterilisation des Lebensmittels oder Tierfutters nach dem Abfüllen in den Mehrschichtverbund, das so genannte Retort-Verfahren.

Bevorzugt betrifft die vorliegende Erfindung daher die erfindungsgemäße Verwendung, wobei diese für Behandlungen unter hoher Temperatur geeignet sind, insbesondere das Erwärmen oder Garen des Lebensmittels oder Tierfutters in der Verpackung, das so genannte Boil-in-Bag, das heiße Abfüllen des Lebensmittels oder Tierfutters, das so genannte Hot-filling, oder eine Dampfsterilisation des Lebensmittels oder Tierfutters nach dem Abfüllen in den Mehrschichtverbund, das so genannte Retort-Verfahren.

Die vorliegende Erfindung betrifft des Weiteren eine Verpackung enthaltend einen erfindungsgemäßen Mehrschichtverbund.

### Beispiele

### Rohstoffe / verwendete Materialien:

| | |
|---|---|
| Polyesterfolie: | Hostaphan^{®} RNK 23 µm unbehandelt, Fa. Mitsubishi Polyester Film, D-65203 Wiesbaden |
| Aluminiumfolie: | Reinaluminiumfolie Leg. 8011 12 µm, Fa. Korff AG, CH-4538 Oberbipp, Schweiz |
| PVC-Druckfarbe: | Bindemittel Polyvinylchlorid, Farbe weiß; Lösemittel Ethylacetat |
| PU-Druckfarbe: | Bindemittel Polyurethan; Farbe weiß; Lösemittel Ethylacetat |

### Herstellung der eingesetzten Polyurethandispersionen:

PUD 1:
   800,2 g eines Polyesterdiols aus Adipinsäure, Isophthalsäure und 1,6-Hexandiol mit der OH-Zahl 56 und 26,74 g Dimethylolpropionsäure wurden 60 min bei 90 °C und 50 mbar (a) entwässert. Anschließend wurde die Mischung zunächst 15 min lang unter ständigem Rühren bei 80 °C homogenisiert, danach 197,4 g Isophorondiisocyanat (IPDI) zugegeben, auf 110 °C erwärmt und die Temperatur konstant bei 110 °C gehalten. Nach 1 h 15 min wurde ein konstanter Isocyanatgehalt von 2,35 Gew.-% erreicht. Zum Lösen des gebildeten Prepolymers wurden 1540 g Aceton zugefügt und die Mischung 20 Minuten bei 48 °C gerührt. Unter Rühren wurde bei 48 °C mit 15,13 g Triethylamin, gelöst in 50 g Aceton, neutralisiert. Nach 15 Minuten wurde bei 48 °C eine Mischung aus 10,35 g Ethylendiamin, 2,40 Diethanolamin und 115 g Wasser zugesetzt und weitere 30 Minuten gerührt. Anschließend wurden zu der acetonischen Prepolymermischung unter kräftigem Rühren 1460 g Wasser gegeben und 20 Minuten bei 48 °C dispergiert. Nach destillativer Entfernung des Acetons erhielt man eine wässrige Dispersion mit einem Festkörpergehalt von 40,0 Gew.-%.
PUD 2:
   909,4 g eines Polyesterdiols aus Adipinsäure, Isophthalsäure und 1,6-Hexandiol mit der OH-Zahl 56 und 30,4 g Dimethylolpropionsäure wurden 60 min bei 90 °C und 50 mbar (a) entwässert. Anschließend wurde die Mischung zunächst 15 min lang unter ständigem Rühren bei 80 °C homogenisiert, danach 224,4 g Isophorondiisocyanat (IPDI) zugegeben, auf 110 °C erwärmt und die Temperatur konstant bei 110 °C gehalten. Nach 1 h 20 min wurde ein konstanter Isocyanatgehalt von 2,29 Gew.-% erreicht. Zum Lösen des gebildeten Prepolymers wurden 1750 g Aceton zugefügt und die Mischung 20 Minuten bei 48 °C gerührt. Anschließend wurde bei 48 °C unter Rühren eine Lösung von 15,64 g Ethylendiamin in 140 g Wasser zugegeben und 30 Minuten gerührt. Anschließend wurden unter Rühren bei 48 °C innerhalb von 5 min 18,12 g einer 25 gew.-%igen wässrigen Ammoniak-Lösung zugetropft und weitere 15 Minuten gerührt. Danach wurden zu der acetonischen Prepolymermischung unter kräftigem Rühren 1640 g Wasser gegeben und 20 Minuten bei 48 °C dispergiert. Nach destillativer Entfernung des Acetons erhielt man eine wässrige Dispersion mit einem Festkörpergehalt von 40,2 Gew.-%.
PUD 3:
   909,4 g eines Polyesterdiols aus Adipinsäure, Isophthalsäure und 1,6-Hexandiol mit der OH-Zahl 56 und 30,4 g Dimethylolpropionsäure wurden 60 min bei 90 °C und 50 mbar (a) entwässert. Anschließend wurde die Mischung zunächst 15 min lang unter ständigem Rühren bei 80 °C homogenisiert, danach 224,4 g Isophorondiisocyanat (IPDI) zugegeben, auf 110 °C erwärmt und die Temperatur konstant bei 110 °C gehalten. Nach 1 h 20 min wurde ein konstanter Isocyanatgehalt von 2,37 Gew.-% erreicht. Zum Lösen des gebildeten Prepolymers wurden 1750 g Aceton zugefügt und die Mischung 20 Minuten bei 48 °C gerührt. Anschließend wurde bei 48 °C unter Rühren eine Lösung von 17,82 g Ethylendiamin in 160 g Wasser zugegeben und 30 Minuten gerührt. Anschließend wurden unter Rühren bei 48 °C innerhalb von 5 min 16,81 g einer 25 gew.-%igen wässrigen Ammonik-Lösung zugetropft und weitere 15 Minuten gerührt. Danach wurden zu der acetonischen Prepolymermischung unter kräftigem Rühren 1625 g Wasser gegeben und 20 Minuten bei 48 °C dispergiert. Nach destillativer Entfernung des Acetons erhielt man eine wässrige Dispersion mit einem Festkörpergehalt von 40,1 Gew.-%.
PUD 4:
   800,2 g eines Polyesterdiols aus Adipinsäure, Isophthalsäure und 1,6-Hexandiol mit der OH-Zahl 56 und 26,74 g Dimethylolpropionsäure wurden 60 min bei 90 °C und 50 mbar (a) entwässert. Anschließend wurde die Mischung zunächst 15 min lang unter ständigem Rühren bei 80 °C homogenisiert, danach eine Mischung aus 196,38 g Isophorondiisocyanat (IPDI) und 1,74 g Desmodur N 3300 (Trimerisat von Hexamethylendiisocyanat; Covestro AG Deutschland) zugegeben, auf 110 °C erwärmt und die Temperatur konstant bei 110 °C gehalten. Nach 1 h wurde ein konstanter Isocyanatgehalt von 2,35 Gew.-% erreicht. Zum Lösen des gebildeten Prepolymers wurden 1540 g Aceton zugefügt und die Mischung 20 Minuten bei 48 °C gerührt. Anschließend wurde bei 48 °C unter Rühren eine Lösung von 13,76 g Ethylendiamin in 124 g Wasser zugegeben und 30 Minuten gerührt. Anschließend wurden unter Rühren bei 48 °C innerhalb von 5 min 18,45 g einer 25 gew.-%igen, wässrigen Ammoniak-Lösung zugetropft und weitere 15 Minuten gerührt. Danach wurden zu der acetonischen Prepolymermischung unter kräftigem Rühren 1450 g Wasser gegeben und 20 Minuten bei 48 °C dispergiert. Nach destillativer Entfernung des Acetons erhielt man eine wässrige Dispersion mit einem Festkörpergehalt von 40,1 Gew.-%.

Vernetzer:

| | |
|---|---|
| Desmodur XP 2802: | ca. 40 gew.-%ige wässrige Dispersion von Polycarbodiimid mit einem Carbodiimidgehalt von ca. 1 DCC eq. (mmol/g), Covestro Deutschland AG |

### Klebstoffdispersionen:

Beispiel 1: 100 Gew.-Teile PUD 1 + 13,5 Gew.-Teile Desmodur XP 2802
Beispiel 2: 100 Gew.-Teile PUD 2 + 13,5 Gew.-Teile Desmodur XP 2802
Beispiel 3: 100 Gew.-Teile PUD 3 + 13,5 Gew.-Teile Desmodur XP 2802
Beispiel 4: 100 Gew.-Teile PUD 4 + 13,5 Gew.-Teile Desmodur XP 2802

### Herstellung der Folienverbunde:

Labo Combi 400: Duplex-Kaschiermaschine für Laboratorien der Fa. Nordmeccanica, Italien. Die Kaschiermaschine verfügt über eine inline Corona-Station für die Vorbehandlung von niederenergetischen Folienoberflächen sowie über einen Trockenkanal zum Ablüften der Lösemittel bzw. Wasser.

### Bedruckung der Polyesterfolie:

Der Auftrag der Druckfarben auf die Polyesterfolie erfolgte mit der Labo Combi 400. Die Polyesterfolie wurde vor dem Bedrucken inline mit Corona vorbehandelt. Die Oberflächenenergie der Polyesterfolie lag in allen Fällen > 40mN/m.

Die Druckfarbe wurde mit Ethylacetat auf die Verarbeitungsviskosität eingestellt. Der Auftrag der Druckfarbe erfolgte im Tiefdurckverfahren mittels Gravurwalze. Die Bahngeschwindigkeit betrug jeweils 30 m/mim. Die mit Druckfarbe beschichtete Folienbahn wurde anschließend durch den Trockenkanal geführt. Die Temperatur im Trockenkanal betrug 70 °C. Das Auftragsgewicht der vollflächig gedruckten Schicht nach dem Ablüften des Lösemittels wurde in allen Fällen auf 2 g/m² eingestellt.

### Herstellung der Mehrschichtverbunde aus PET/Druckfarbe/Klebstoff/Aluminiumfolie

Die Fertigung der Mehrschichtverbunde erfolgte mit der Labo Combi 400. Die wässrigen KlebstoffDispersionen gemäß den Beispielen 1 bis 4 mit jeweils ca. 40 Gew.-% Polymeranteil wurden mittels Gravurwalze auf die bedruckte Seite der Polyesterfolie aufgetragen. Die so erhaltene Klebstoffschicht wurde im Trockenkanal bei 70 °C getrocknet. Dann wurde die Aluminiumfolie in dem auf 40 °C erwärmten Kaschierwerk unter Druck gegen die klebstoffbeschichtete, bedruckte Polyesterfolie kaschiert.

**Tabelle 1: Klebstoffauftragsgewichte**

| **Beispiel** | **ohne Druckfarbe** | **PVC-Druckfarbe** | **PU - Druckfarbe** |
|---|---|---|---|
| **1** | 4,6 | 5,1 | 5,7 |
| **2** | 4,4 | 5,0 | 4,5 |
| **3** | - | - | 4,0 |
| **4** | - | - | 5,6 |

| | | | |
|---|---|---|---|
| Alle Angaben in g/m² | | | |

Es wurden somit Verbunde mit dem folgenden Aufbau erhalten:

| | |
|---|---|
| V1 (Vergleich) | PET / Klebstoff aus Beispiel 1 bis 4 / Aluminiumfolie |
| V2 (Vergleich) | PET / vollflächig mit PVC-Druckfarbe (Auftragsgewicht 2,0 g/m²) bedruckt / Klebstoff aus Beispiel 1 bis 4 / Aluminiumfolie |
| 3 (erfindungsgemäß) | PET / vollflächig mit PU-Druckfarbe (Auftragsgewicht 2,0 g/m²) bedruckt / Klebstoff aus Beispiel 1 bis 4 / Aluminiumfolie |

### Lagerungs- bzw. Delaminierungstest:

Zug-Scherprüfung an gelagerten Proben (Folienlaminate): Dazu wurden Proben bei 23 °C/50% r.h. gelagert. Nach 1 Woche wurde die Verbundfestigkeit bestimmt. Zusätzlich wurden die gelagerten Verbunde nach 1 Woche, nach einer Sterilisation unter den Bedingungen 60 min @ 120 °C und 60 min @ 134 °C weitere 24 h gelagert und anschließend die Zug-Scherfestigkeit geprüft.

Muss/Soll auf die Sterilisation eingegangen werden?

Mit den erhaltenen Verbunden V1, V2 oder 3 wurden Lagerungs- bzw. Delaminierungstests durchgeführt. Die Ergebnisse sind in Tabelle 2 dargestellt:

**Tabelle 2: Ergebnisse der Lagerungs- bzw. Delaminierungstests**

| Nr. | Klebstoff aus Beispiel | Messung nach Lagerung der Verbunde bei 23 °C/50% r.h. | Verbunde V1 [N/15mm] | Verbunde V2 [N/15mm] | Verbunde 3 [N/15mm] |
|---|---|---|---|---|---|
| 5 | 1 | nach 1 Woche | 2,5 | 5,3 | 5,0 |
| 6 | 1 | Nr. 5 + 24 h nach 60 min. @ 121 °C | F | DEL | 1,8f |
| 7 | 1 | Nr. 5 + 24 h nach 60 min. @ 134 °C | F | DEL | 0,7f |
| 8 | 2 | nach 1 Woche | 5,0 | 1,2 | 5,4 |
| 9 | 2 | Nr. 8 + 24 h nach 60 min. @ 121 °C | 6,0 | DEL | 7,1 |
| 10 | 2 | Nr. 8 + 24 h nach 60 min. @ 134 °C | 5,2f | DEL | 1,6 |
| 11 | 3 | nach 1 Woche | 5,8 | - | 10,2 |
| 12 | 3 | Nr. 11 + 24 h nach 60 min. @ 121 °C | - | - | 7,4 |
| 13 | 3 | Nr. 11 + 24 h nach 60 min. @ 134 °C | - | - | 3,8 |
| 14 | 4 | nach 1 Woche | - | - | 6,2 |
| 15 | 4 | Nr. 14 + 24 h nach 60 min. @ 121 °C | - | - | 7,7f |
| 16 | 4 | Nr. 14 + 24 h nach 60 min. @ 134 °C | - | - | 3,8f |

| | | | | | |
|---|---|---|---|---|---|
| DEL Delaminierung f Abriss während der Prüfung F Probe reißt bereits in/an der Klebenaht (vor dem Einspannen) | | | | | |

Die Mehrschichtverbunde V2 (mit PVC-Druckfarbe) delaminieren unter Bedingungen, die einer Behandlung im Dampfsterilisator entsprechen, d.h. 60 min. bei 121 °C bzw. 60 min. bei 134°C.

Die Mehrschichtverbunde 3 (mit PU-Druckfarbe) erreichen auch unter Bedingungen, die einer Behandlung im Dampfsterilisator entsprechen, d.h. 60 min. bei 121 °C bzw. 60 min. bei 134 °C, durchweg hohe Werte.

## Patentansprüche

1. Mehrschichtverbund, mindestens enthaltend eine erste, polymere Schicht, die auf mindestens einer Seite mit mindestens einer Druckfarbe enthaltend mindestens ein Polyurethan als Bindemittel beschichtet ist, und eine zweite Schicht, die mit einer Polyurethan-Dispersion als Haftmittel zumindest teilweise mit der Seite der ersten polymeren Schicht, die mit mindestens einer Druckfarbe enthaltend mindestens ein Polyurethan als Bindemittel beschichtet ist, verbunden ist.

2. Mehrschichtverbund nach Anspruch 1, **dadurch gekennzeichnet, dass** das Material der mindestens einen ersten, polymeren Schicht ausgewählt ist aus Polyethylen (PE), Polypropylen (PP), Polyamid (PA), Polyestern, Polyacetat, Zellophan, Polylactid (PLA) und Mischungen davon.

3. Mehrschichtverbund nach Anspruch 1 oder 2, **dadurch gekennzeichnet, dass** die mindestens eine weitere Schicht eine polymere Schicht oder eine Schicht aus mindestens einem Metall, bevorzugt Aluminium, ist.

4. Mehrschichtverbund nach einem der Ansprüche 1 bis 3, **dadurch gekennzeichnet, dass** als Haftmittel mindestens eine 1K-Polyurethan-Dispersion eingesetzt wird.

5. Mehrschichtverbund nach einem der Ansprüche 1 bis 4, **dadurch gekennzeichnet, dass** als Haftmittel mindestens eine Polyurethan-Dispersion eingesetzt wird, welche eine Mischung aus mindestens einer wässrigen Polyurethan-Dispersion (I) und mindestens einer wässrigen Dispersion mindestens eines hydrophilierten Polycarbodiimids (II) ist.

6. Mehrschichtverbund nach einem der Ansprüche 1 bis 5, **dadurch gekennzeichnet, dass**, die erste, polymere Schicht aus einem Polyester besteht und die zweite Schicht aus Aluminium besteht.

7. Verfahren zur Herstellung des Mehrschichtverbundes nach einem der Ansprüche 1 bis 6, mindestens umfassend die Schritte:
(A) Bereitstellen mindestens einer ersten, polymeren Schicht, die auf mindestens einer Seite mit mindestens einer Druckfarbe enthaltend mindestens ein Polyurethan als Bindemittel beschichtet ist,
(B) Auftragen einer Polyurethan-Dispersion als Haftmittel auf die erste, polymere Schicht,
(C) Inkontaktbringen der ersten, polymeren Schicht aus Schritt (B) mit mindestens einer zweiten Schicht, um den erfindungsgemäßen Mehrschichtverbund zu erhalten.

8. Verfahren nach Anspruch 7, **dadurch gekennzeichnet, dass** in Schritt (B) als Haftmittel mindestens eine Polyurethan-Dispersion eingesetzt wird, die eine 1-komponentige Verarbeitung ermöglicht.

9. Verwendung des Mehrschichtverbundes nach einem der Ansprüche 1 bis 6 zur Verpackung von Lebensmitteln oder Tierfutter.

10. Verwendung nach Anspruch 9 für Behandlungen unter hoher Temperatur, insbesondere das Erwärmen oder Garen des Lebensmittels oder Tierfutters in der Verpackung, das so genannte Boil-in-Bag, das heiße Abfüllen des Lebensmittels oder Tierfutters, das so genannte Hot-filling, oder eine Dampfsterilisation des Lebensmittels oder Tierfutters nach dem Abfüllen in den Mehrschichtverbund, das so genannte Retort-Verfahren.

11. Verpackung enthaltend einen Mehrschichtverbund nach einem der Ansprüche 1 bis 6.
